(19) Europäisches Patentamt
European Patent Office
Office européen des brevets

(11) Veröffentlichungsnummer : **0 017 985**
**B1**

(12) **EUROPÄISCHE PATENTSCHRIFT**

(45) Veröffentlichungstag der Patentschrift : **28.04.82**

(51) Int. Cl.³ : **C 08 G 77/40**, C 08 G 77/08, C 08 G 77/26

(21) Anmeldenummer : **80102058.7**

(22) Anmeldetag : **17.04.80**

# (54) Verfahren zur Herstellung von Organopolysiloxanen.

(30) Priorität : **19.04.79 DE 2915751**
**25.05.79 DE 2921375**

(43) Veröffentlichungstag der Anmeldung : **29.10.80 (Patentblatt 80/22)**

(45) Bekanntmachung des Hinweises auf die Patenterteilung : **28.04.82 Patentblatt 82/17**

(84) Benannte Vertragsstaaten : **BE DE FR GB IT NL**

(56) Entgegenhaltungen :
**DE - B - 1 101 767**
**US - A - 3 042 657**

(73) Patentinhaber : **WACKER-CHEMIE GMBH**
**Prinzregentenstrasse 22**
**D-8000 München 22 (DE)**

(72) Erfinder : **Kaufmann, Rudolf, Dr. Dipl.-Chem.**
**Wackerstrasse 5**
**D-8263 Burghausen (DE)**
Erfinder : **Müller, Johann**
**Regerstrasse 12**
**D-8263 Burghausen (DE)**
Erfinder : **Wegehaupt, Karl-Heinrich, Dr.**
**Marktler Strasse 78**
**D-8263 Burghausen (DE)**

**EP 0 017 985 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

Verfahren zur Herstellung von Organopolysiloxanen

Es ist bereits bekannt, Organosilanole mit Isocyanaten zu Organosiliciumverbindungen mit über Sauerstoff an Silicium gebundenen, substituierten Carbamoyloxygruppen (≡SiOCO—NH—) umzusetzen, und es wurde auch bereits empfohlen, Si-gebundene Hydroxylgruppen aufweisende Polysiloxane mit zwei- oder dreiwertigen Isocyanaten umzusetzen (vgl. GB-PS 888 938, veröffentlicht : 7. Februar 1962, Imperial Chemical Industries). Wenn es sich bei den Polysiloxanen um Organopolysiloxane, also um Polysiloxane mit SiC-gebundenen organischen Resten, und nicht um Alkoxypolysiloxane handelt, wie um Di-tert.-butoxypolysiloxane, werden jedoch bei der Umsetzung mit Isocyanaten keine Organopolysiloxane mit Carbamoyloxygruppen erhalten. Es findet vielmehr keine Reaktion statt oder es wird lediglich Wasser aus den Si-gebundenen Hydroxylgruppen der Organopolysiloxane abgespalten, so daß die Viskosität der Organopolysiloxane ansteigt. Bei dem erfindungsgemäßen Verfahren werden dagegen Organopolysiloxane mit über Sauerstoff an Silicium gebundenen, substituierten Carbamoyloxygruppen erhalten.

Gegenstand der Erfindung ist ein Verfahren zur Herstellung von Organopolysiloxanen mit über Sauerstoff an Silicium gebundenen, substituierten Carbamoyloxygruppen, dadurch gekennzeichnet, daß mindestens ein mindestens eine Si-gebundene Hydroxylgruppe aufweisendes Organopolysiloxan mit mindestens einem einwertigen oder mehrwertigen organischen Isocyanat als einzigen Reaktionsteilnehmern in Gegenwart von organischer Zinnverbindung umgesetzt wird.

Beispielsweise aus DE-OS 17 69 666 (offengelegt : 3. Dezember 1970, Dow Corning Corp., wobei diese DE-OS der CA-PS 832 520 und FR-PS 15 72 724 entspricht) und DE-OS 21 35 673 (offengelegt : 1. Februar 1973, Bayer AG, wobei diese DE-OS der GB-PS 13 42 229 entspricht) sind zwar schon Mittel zur Herstellung von klebrige Stoffe abweisenden Beschichtungen bekannt, wobei diese Mittel durch Vermischen von Si-gebundene Hydroxylgruppen aufweisendem Organopolysiloxan nicht nur mit Isocyanat und organischer Zinnverbindung, sondern auch außerdem mit Kieselsäureester und Organopolysiloxan mit Si-gebundenem Wasserstoff bzw. mit Acetoxysilan als weiteren Stoffen bereitet werden. Es ist jedoch bisher nicht bekannt geworden, daß diese Mittel oder die daraus hergestellten Beschichtungen Organopolysiloxane mit über Sauerstoff an Silicium gebundenen, substituierten Carbamoyloxygruppen enthalten.

Bei dem erfindungsgemäßen Verfahren eingesetztes, mindestens eine Si-gebundene Hydroxylgruppe aufweisendes Organopolysiloxan ist vorzugsweise aus Diorganosiloxaneinheiten, Monoorganosiloxaneinheiten, Triorganosiloxaneinheiten, $SiO_{4/2}$-Einheiten oder aus Gemischen aus mindestens 2 der vorstehend genannten Einheiten aufgebaut, natürlich mit der Maßgabe, daß die Anzahl der $SiO_{4/2}$-Einheiten höchstens so groß ist wie die Anzahl der Diorganosiloxan-, Monoorganosiloxan- und/oder Triorganosiloxaneinheiten, daß je Molekül mindestens eines der Siloxansauerstoffatome durch eine Hydroxylgruppe ersetzt sein muß und daß je Molekül mindestens 2 Siloxaneinheiten, vorzugsweise mindestens 3 Siloxaneinheiten, vorliegen. Die Anzahl der Siloxaneinheiten je Molekül kann 1000 oder mehr betragen. Weiterhin ist bevorzugt, daß alle nicht durch SiC-gebundene organische Reste und Hydroxylgruppen abgesättigten Siliciumvalenzen durch Siloxansauerstoffatome abgesättigt sind, mindestens 2 Diorganosiloxaneinheiten und/oder mindestens 2 Si-gebundene Hydroxylgruppen je Molekül vorliegen und, insbesondere wegen der leichteren Zugänglichkeit, die Anzahl der gegebenenfalls vorhandenen Triorganosiloxaneinheiten kleiner als die Anzahl der gegebenenfalls vorhandenen Monoorganosiloxaneinheiten ist. Besonders bevorzugt wird bei dem erfindungsgemäßen Verfahren als mindestens eine Si-gebundene Hydroxylgruppe aufweisendes Organopolysiloxan in den endständigen Einheiten je eine Si-gebundene Hydroxylgruppe aufweisendes Diorganopolysiloxan.

Monoorganosiloxaneinheiten können durch die Formel $RSiO_{3/2}$, Diorganosiloxaneinheiten können durch die Formel $R_2SiO$ und Triorganosiloxaneinheiten können durch die Formel $R_3SiO_{1/2}$ wiedergegeben werden. In allen diesen Formeln bedeutet im Rahmen des erfindungsgemäßen Verfahrens R gleiche oder verschiedene einwertige Kohlenwasserstoffreste, die gegenüber Isocyanaten inerte Substituenten, insbesondere Fluor und/oder Chlor, aufweisen können. Vorzugsweise enthalten die organischen Reste im erfindungsgemäß eingesetzten Organopolysiloxan 1 bis 12 Kohlenstoffatome je Rest.

Beispiele für organische Reste im erfindungsgemäß eingesetzten Organopolysiloxan und damit auch für Kohlenwasserstoffreste R sind Alkylreste, wie der Methyl-, Äthyl-, n-Propyl-, Isopropyl-, n-Butyl- und sec.-Butylrest sowie Octyl- und Dodecylreste. Cycloalkylreste, wie der Cyclopentyl-, Cyclohexyl- und Cyclo-heptylrest ; Alkenylreste, wie der Vinyl- und Allylrest ; Arylreste, wie der Phenylrest ; Alkarylreste, wie Tolylreste ; und Aralkylreste, wie der Benzylrest. Beispiele für substituierte Kohlenwasserstoffreste R sind der 1,1,1-Trifluorpropylrest und alpha, alpha, alpha-Trifluortolylreste sowie Chlorphenyl- und Dichlorphenylreste. Insbesondere wegen der leichteren Zugänglichkeit sind jedoch vorzugsweise mindestens 80 % der Anzahl der organischen Reste im erfindungsgemäß eingesetzten Organopolysiloxan und damit der Reste R Methylreste.

Wenn die erfindungsgemäß eingesetzten Isocyanate mehrwertig sind, so enthalten sie vorzugsweise höchstens 10 Isocyanatgruppen je Molekül. Bei den erfindungsgemäß eingesetzten

Isocyanaten kann es sich um monomere Verbindungen und/oder um Präpolymere handeln. Beispielhaft für erfindungsgemäß einsetzbare Isocyanate sind Phenylisocyanat, p-Äthoxyphenylisocyanat, o-, m- und p-Tolylisocyanat, Naphthylendiisocyanat, Diphenylmethan-4,4'-diisocyanat, Toluylendiisocyanate, Triphenylmethan-4,4',4"-triisocyanat und Polyphenylpolymethylenpolyisocyanate sowie ein unter der Bezeichnung « Desmodur (Registriertes Warenzeichen) L" im Handel erhältliches Umsetzungsprodukt aus Toluylendiisocyanaten und 1,1,1-Trimethylolpropan. Zahlreiche weitere Beispiele für mehrwertige Isocyanate, die alle erfindungsgemäß eingesetzt werden können, sind in US-PS 39 93 606, W. v. Bonin et al, Bayer AG, angegeben.

Mehrwertige Isocyanate, insbesondere solche mit 2 oder 3 Isocyanatgruppen je Molekül, sind bevorzugt.

Isocyanat wird vorzugsweise in Mengen von mindestens 1 Grammol Isocyanatgruppe je Grammol Si-gebundener Hydroxylgruppe eingesetzt. Es können 100 und mehr Grammole Isocyanatgruppen je Grammol Si-gebundener Hydroxylgruppe eingesetzt werden.

Beispiele für organische Zinnverbindungen sind Di-n-butylzinndiacetat, Di-n-butylzinndilaurat, Di-n-butylzinnoxyd, Zinn(II)-2-äthylhexoat, ein Gemisch aus Di-n-butylzinndiacylaten, wobei sich die Acylatgruppen von einem Gemisch aus jeweils 9 bis 11 Kohlenstoffatome je Molekül aufweisenden Carbonsäuren, worin die Carboxylgruppe bei mindestens 90 Gewichtsprozent der Säuren an ein tertiäres Kohlenstoffatom gebunden ist, ableiten, Di-n-butyl-di-2-äthylhexoat und Distannoxane, wie Diacetoxytetra-n-butyldistannoxan und Dioleoyltetramethyldistannoxan. Falls erwünscht, können verschiedene Arten von organischen Zinnverbindungen eingesetzt werden. Di-n-butylzinndilaurat ist bevorzugt.

Organische Zinnverbindung wird vorzugsweise in Mengen von 0,001 bis 5 Gewichtsprozent, bezogen auf das Gewicht der jeweils eingesetzten Menge an mindestens eine Si-gebundene Hydroxylgruppe enthaltendem Organopolysiloxan, eingesetzt.

Um das erfindungsgemäße Verfahren bei niedriger Temperatur und/oder in kürzerer Zeit durchführen zu können, insbesondere aber zur Erzielung besonders lagerbeständiger Reaktionsprodukte, ist es bevorzugt, bei der Umsetzung von mindestens eine Si-gebundene Hydroxylgruppe aufweisendem Organopolysiloxan mit organischem Isocyanat die organische Zinnverbindung auf mindestens einer Art von festem Träger einzusetzen und zur Entfernung des Katalysators das Reaktionsprodukt unter Ausschluß des Zutritts von Wasser zu filtrieren.

Als fester Träger ist Aktivkohle bevorzugt. Weitere Beispiele für im Rahmen der Erfindung einsetzbare Träger sind Silicium-dioxyde, Aluminiumoxyde, Graphitkohlen, Siliciumkarbid, Tone, einschließlich Bentoniten, und Zeolithe. Diese festen Träger sollten in möglichst wasserfreier Form eingesetzt werden und neutral reagieren.

Fester Träger wird vorzugsweise in Mengen von 5 bis 500 Gewichtsteilen, insbesondere 10 bis 150 Gewichtsteilen, je Gewichtsteil organischer Zinnverbindung, verwendet.

Organische Zinnverbindung kann in einem gegenüber der organischen Zinnverbindung inerten Lösungsmittel wie Aceton, auf den Träger aufgebracht werden, wonach das Lösungsmittel verdampft werden kann. Dieses Verdampfen kann unter vermindertem Druck erfolgen.

Bei der Durchführung des erfindungsgemäßen Verfahrens kann ein gegenüber den Reaktionsteilnehmern und Reaktionsprodukten inertes wasserfreies Lösungsmittel mitverwendet werden. Beispiele für geeignete Lösungsmittel sind Kohlenwasserstoffe, wie Toluol, halogenierte Kohlenwasserstoffe, wie Perchloräthylen und Methylenchlorid, Ester, wie Äthylacetat, und Äther, wie Tetrahydrofuran, Di-n-butyläther oder Dioxan. Falls erwünscht, können Gemische aus verschiedenen Lösungsmitteln eingesetzt werden.

Das erfindungsgemäße Verfahren wird vorzugsweise bei einer Temperatur im Bereich von Raumtemperatur bis 150 °C durchgeführt. Weil dies den geringsten Aufwand erfordert, wird das erfindungsgemäße Verfahren vorzugsweise beim Druck der umgebenden Atmosphäre, also bei 1 bar oder etwa 1 bar, durchgeführt. Falls erwünscht, können aber auch höhere oder niedrigere Drücke angewandt werden. Das erfindungsgemäße Verfahren kann unter Bewegung der Reaktionsteilnehmer, z.B. durch Rühren oder Umwälzen, sowie absatzweise, halbkontinuierlich oder vollkontinuierlich erfolgen. Der feste Träger kann beweglich oder in einem festen Bett angeordnet sein.

Die erfindungsgemäß erhaltenen Verbindungen enthalten zumindest bei Anwendung eines Überschusses von Isocyanat mit 1 bis 10 Isocyanatgruppen die Gruppierung

$$\equiv SiO\overset{|}{\underset{|}{Si}}O\underset{\overset{\|}{O}}{C}NHA\,(NCO)_a$$

worin a eine ganze Zahl von 1 bis 9 ist und A den organischen Rest bedeutet, an den die Isocyanatgruppe(n) des eingesetzten organischen Rests gebunden war(en).

Die erfindungsgemäß erhaltenen Verbindungen eignen sich beispielsweise als Gleitmittel für organische und anorganische Fasern, als Mittel zur Herstellung von Überzügen, z.B. auf Glas, zur Glanz- und Griffverbesserung von Kunstleder und natürlichem Leder sowie als Zusätze bei der Herstellung oder Verarbeitung von Polyurethanen.

In den folgenden Beispielen beziehen sich alle Angaben von Prozentsätzen auf das Gewicht, soweit nichts anderes angegeben ist.

Beispiel 1

200 g eines in den endständigen Einheiten je eine Si-gebundene Hydroxylgruppe aufweisenden Dimethylpolysiloxans mit durchschnittlich etwa 13 Siliciumatomen je Molekül und dem Brechungs-index von 1,404 werden mit 11,76 g eines Gemisches aus etwa 80 % 2,4-Toluylendiisocyanat und etwa 20 % 2,6-Toluylendiisocyanat, 200 ml Toluol und 4 g einer Mischung, die durch Aufschlämmen von 19 g Aktivkohle in 100 g Aceton, Vermischen dieser Suspension mit 1 g Di-n-butylzinndilaurat und Abdestillieren des Acetons zur Trockene hergestellt wurde, vermischt. Die so erhaltene Mischung wird eine Stunde zum Sieden unter Rückfluß erwärmt. Nach dem Abkühlen der Mischung auf Raumtemperatur wird unter Ausschluß von Wasser filtriert. Das Filtrat ist nach dem Abdestillieren des Toluols ein klares, schwach gelbes Öl mit einem Brechungsindex von 1,417.

Eine 50 %ige Lösung dieses Öls in Toluol bleibt mehrere Wochen unter Ausschluß von Wasser unverändert. Bei Zutritt des in der Luft enthaltenen Wasserdampfs zersetzt sich die Lösung unter Gasentwicklung und Bildung eines festen Stoffes.

Beispiel 2

Zu 1000, 5 g der im Handel unter der Bezeichnung «Desmodur (Registriertes Warenzeichen) L» erhältlichen 75 %igen Lösung eines Umsetzungsproduktes aus Toluylendiisocyanaten und 1,1,1-Trimethylolpropan in Äthylacetat werden zunächst mit 450 g Äthylacetat, dann mit 88,5 g Di-n-butyläther, dann mit 19,5 g der Mischung aus Aktivkohle und Di-n-butylzinndilaurat, deren Herstellung in Beispiel 1 beschrieben wurde, und schließlich mit 30 g des in den endständigen Einheiten je eine Si-gebundene Hydroxylgruppe aufweisenden Dimethylpolysiloxans mit durchschnittlich etwa 13 Siliciumatomen je Molekül vermischt. Die so erhaltene Mischung wird eine Stunde zur Sieden unter Rückfluß erwärmt. Nach dem Abkühlen der Mischung auf 50 °C wird unter Ausschluß von Wasser filtriert. Das Filtrat ist klar und leicht grüngelblich und bleibt unter Ausschluß von Wasser einige Monate unverändert. Es härtet nach dem Auftragen auf eine Glasplatte zu einem klaren Film.

Beispiel 3

In 450 g Äthylacetat werden 18,5 g Aktivkohle aufgeschlämmt. Die so erhaltene Suspension wird zunächst mit 1 g Di-n-butylzinndilaurat, dann mit 1000, 5 g der 75 %igen Lösung eines Umsetzungsproduktes aus Toluylendiisocyanaten und 1,1,1-Trimethylolpropan in Äthylacetat, dann mit 88,5 g Di-n-butyläther und schließlich mit 30 g des in den endständigen Einheiten je eine Si-gebundene Hydroxylgruppe aufweisenden Dimethylpolysiloxans mit durchschnittlich etwa 13 Siliciumatomen je Molekül vermischt. Die so erhaltene Mischung wird eine Stunde zum Sieden unter Rückfluß erwärmt. Nach dem Abkühlen der Mischung auf 50 °C wird unter Ausschluß von Wasser filtriert. Das so erhaltene Filtrat hat die gleichen Eigenschaften wie das bei dem Verfahren gemäß Beispiel 2 erhaltene Filtrat.

Vergleichsversuch a

Eine Mischung aus 5 g Äthylacetat und 10 g der 75 %igen Lösung eines Umsetzungsproduktes aus Toluylendiisocyanaten und 1,1,1-Trimethylolpropan in Äthylacetat wird mit 0,38 g des in den endständigen Einheiten je eine Si-gebundene Hydroxylgruppe aufweisenden Dimethylpolysiloxans mit durchschnittlich etwa 13 Siliciumatomen je Molekül vermischt. Das so erhaltene Gemisch ist trüb, weil das Organopolysiloxan in der Mischung der übrigen Bestandteile nicht löslich ist, und bleibt unter Ausschluß von Wasser einige Tage unverändert. Das Gemisch härtet nach dem Auftragen auf eine Glasplatte zu einem trüben Film.

Vergleichsversuch b

Zu 29,2 g der 75 %igen Lösung eines Umsetzungsproduktes aus Toluylendiisocyanaten und 1,1,1-Trimethylolpropan in Äthylacetat, die unter Ausschluß von Wasser auf 75 °C erwärmt wurde, werden 200 g des in den endständigen Einheiten je eine Sigebundene Hydroxylgruppe aufweisenden Dimethylpolysiloxans mit durchschnittlich etwa 13 Siliciumatomen tropfenweise gegeben. Die so erhaltene Mischung wird zwei Stunden zum Sieden unter Rückfluß erwärmt. Es wird ein farbloser pulveriger Niederschlag erhalten, in dem kein Organopolysiloxan nachgewiesen werden kann. Die Viskosität der Organopolysiloxanlösung über diesem Niederschlag hat sich gegenüber der Viskosität der eingesetzten Organopolysiloxanlösung erhöht.

Beispiel 4

Die Mischung, deren Herstellung in Vergleichsversuch a beschrieben wurde, wird mit 0,1 g Di-n-butylzinndilaurat vermischt und 15 Stunden unter Ausschluß von Wasser bei Raumtemperatur stehen gelassen. Es wird eine fast klare Lösung erhalten, von der eine Probe auf einer Glasplatte zu einem nur schwach trüben Film härtet. Die Lösung geliert nach einigen Tagen.

Beispiel 5

200 g des in den endständigen Einheiten je eine Si-gebundene Hydroxylgruppe aufweisenden Dimethylpolysiloxans mit durchschnittlich etwa 13 Siliciumatomen je Molekül werden mit 11,76 g eines Gemisches aus etwa 80 % 2,4-Toluylendiisocyanat und etwa 20 % 2,6-Toluylendiisocyanat, 200 ml Toluol und 0,2 g Di-n-butylzinndilaurat vermischt. Die so erhaltene Mischung wird zwei

Stunden zum Sieden unter Rückfluß erwärmt. Nach dem abkühlen auf Raumtemperatur liegt eine fast klare Lösung vor, die innerhalb von 2 Tagen geliert. Durch Abdestillieren der bei 20 mbar und bis zu einer Badtemperatur von 110 °C siedenden Bestandteile aus der frischen Lösung wird ein gelbliches Öl erhalten, das auch unter Ausschluß von Wasser nach 2 Tagen durchgehärtet ist.

**Ansprüche**

1. Verfahren zur Herstellung von Organopolysiloxanen mit über Sauerstoff an Silicium gebundenen, substituierten Carbamoyloxygruppen, dadurch gekennzeichnet, daß mindestens ein mindestens eine Si-gebundene Hydroxylgruppe aufweisendes Organopolysiloxan mit mindestens einem einwertigen oder mehrwertigen organischen Isocyanat als einzigen Reaktionsteilnehmern in Gegenwart von organischer Zinnverbindung umgesetzt wird.

2. Verfahren nach Anspruch 1, dadurch gekennzeichnet, daß als mindestens eine Si-gebundene Hydroxylgruppe aufweisendes Organopolysiloxan in den endständigen Einheiten je eine Si-gebundene Hydroxylgruppe aufweisendes Diorganopolysiloxan eingesetzt wird.

3. Verfahren nach Anspruch 1 oder 2, dadurch gekennzeichnet, daß bei der Umsetzung von mindestens eine Si-gebundene Hydroxylgruppe aufweisendem Organopolysiloxan mit organischem Isocyanat die organische Zinnverbindung auf mindestens einer Art von festem Träger eingesetzt und zur Entfernung des Katalysators das Reaktionsprodukt unter Ausschluß von Wasser filtriert wird.

4. Verfahren nach Anspruch 3, dadurch gekennzeichnet, daß als fester träger Aktivkohle verwendet wird.

**Claims**

1. Process for the manufacture of organopolysiloxanes having substituted carbamoyloxy groups that are bonded to silicon by oxygen, characterised in that at least one organopolysiloxane having at least one Si-bonded hydroxy group is reacted, in the presence of an organic tin compound, with at least one monovalent or polyvalent organic isocyanate as the only reactants.

2. Process according to claim 1, characterised in that a diorganopolysiloxane having a Si-bonded hydroxy group in each terminal unit is used as the organopolysiloxane having at least one Si-bonded hydroxy group.

3. Process according to claim 1 or claim 2, characterised in that, when reacting the organopolysiloxane having at least one Si-bonded hydroxy group with the organic isocyanate, the organic tin compound is used on at least one type of solid carrier, and in that, in oder to remove the catalyst, the reaction product is filtered while excluding water.

4. Process according to claim 3, characterised in that active carbon is used as the solid carrier.

**Revendications**

1. Procédé de préparation de poly-organosiloxanes renfermant des groupes carbamoyloxy substitués reliés au silicium par l'oxygène, procédé caractérisé en ce qu'on fait réagir au moins un poly-organosiloxane porteur d'au moins un groupe hydroxy relié à Si avec au moins un mono-isocyanate ou poly-isocyanate organique, comme seuls partenaires réactionnels, en présence d'un composé organique de l'étain.

2. Procédé selon la revendication 1 caractérisé en ce qu'on utilise, comme poly-organosiloxane porteur d'au moins un groupe hydroxy relié à Si, un poly-diorganosiloxane contenant, dans chacun de ses motifs terminaux, un groupe hydroxy relié à Si.

3. Procédé selon l'une des revendications 1 et 2, caractérisé en ce que, dans la réaction du polyorganosiloxane porteur d'au moins un groupe hydroxy relié à Si avec un isocyanate organique, le composé organique de l'étain est mis en jeu sur au moins une sorte de support solide, et en ce que, pour éliminer le catalyseur, on filtre le produit réactionnel à l'abri de l'eau.

4. Procédé selon la revendication 3 caractérisé en ce qu'on utilise du charbon actif comme support solide.